# EUROPEAN PATENT APPLICATION

(11) **EP 1 632 386 A1**
(43) Date of publication of application: **08.03.2006**
(21) Application number: 03817257.3
(22) Date of filing: 12.06.2003
(51) Int. Cl.: B60L 11/18, B60S 5/00

(54) **BATTERY CHANGER**

(71) Applicant: TMSUK Co., Ltd., Kitakyushu-shi, Fukuoka 803-0851 (JP)
(72) Inventor: BABA, Katsuyuki, c/o Tmsuk Co., Ltd., Kitakyushu-shi, Fukuoka 803-0851 (JP)
(74) Representative: HOFFMANN EITLE
(86) International application number: PCT/JP2003/007452
(87) International publication number: WO 2004/110806

(57) **Abstract**

The invention provides a battery changer capable of rapidly exchanging a discharged battery of a self-propelled traveling device to remarkably shorten a dead time for movement so as to increase the operation rate .A battery changer 1 exchanges a battery Y to be loaded into a self-propelled traveling device X, and the battery changer includes a battery access part 5 that moves forward and backward between a device body 2 and a battery take-out port Z of a battery placing part of the self-propelled traveling device X ; a battery grasping part 5a disposed at a front end of the battery access part 5 ; a feed mechanism part 6a that is disposed on a front side of the battery access part 5 and that moves perpendicularly in forward and backward directions of the battery access part 5; and two or more battery storage parts 6 movably disposed at the battery access part 5 and the feed mecha

Fig. 2 Path
Wall surface
Light reception
Light emission

## Description

### Technical Field of the Invention

This invention relates to a battery changer that changes a battery of a self-propelled traveling device.

### Background Art of the Invention

Factories, buildings, etc., have been conventionally watched or guarded by a self-propelled traveling device, such as a surveillance robot or a security robot, in order to secure safety in these places. Additionally, a self-propelled traveling device has been used for conveyance, for example, in factories. Generally, such a self-propelled traveling device used for surveillance, security, or conveyance in factories or buildings has a battery mounted as a power source, because the self-propelled traveling device travels along a patrol path specified in a structure, such as a factory or a building, and moves widely.

In accordance with a decrease in battery capacity, the battery mounted on the self-propelled traveling device must be charged or exchanged with another battery having a sufficient capacity. Generally, the former manner, i.e., battery charging, has been conventionally employed from the viewpoint of cost or productivity. A battery charging apparatus is used as an apparatus for charging the batterymountedon the self-propelled traveling device. The battery charging apparatus is placed halfway on the patrol path along which the self-propelled traveling device travels. When the battery mounted thereon is charged, the self-propelled traveling device that is running low on the battery capacity of the temporarily stops moving, and is moved to the location where the battery charging apparatus is placed. The battery is then charged by joining a connector, for example, of the battery to the battery charging apparatus, and, when charging is completed, the self-propelled traveling device returns to, for example, the patrol path and restarts moving.

However, the conventional technique has the following problems.
(1) It is desirable to allow a self-propelled traveling device to be always operated when a battery is charged by use of a battery charging apparatus in a conventional manner. Therefore, swiftness is required for charging, but a problem resides in the fact that the lifetime of the battery will be shortened if fast charging is performed.
(2) When a battery is charged by use of a battery charging apparatus in a conventional manner, a self-propelled traveling device is connected to the battery charging apparatus and cannot move for patrol or other purposes while the battery is being charged. Therefore, a problem resides in the fact that the operation rate of the self-propelled traveling device is lowered.

The present invention has been made to solve the problems mentioned above. It is therefore an object of the present invention to provide a battery changer capable of rapidly exchanging a discharged battery of a self-propelled traveling device to remarkably shorten a dead time for movement so as to increase the operation rate thereof.

### Disclosure of the Invention

To solve the aforementioned problems, the battery changer of the present invention is structured as follows.

The battery changer according to the first aspect of the present invention is a battery changer that exchanges a battery to be loaded into a self-propelled traveling device, and the battery changer includes a battery access part that moves forward and backward between a device body and a battery take-out port of a battery placing part of the self-propelled traveling device; a battery grasping part disposed at a front end of the battery access part; a feed mechanism part that is disposed on a front side of the battery access part and that moves perpendicularly in forward and backward directions of the battery access part; and two or more battery storage parts movably disposed at the battery access part and the feed mechanism part.

With this structure, the following effects are achieved.
(1) The battery access part is advanced to the battery take-out port of the self-propelled traveling device, and the battery is held by the battery grasping part. The battery access part is then moved back, and the battery is taken out from the self-propelled traveling device, whereby the battery can be stored in the battery storage part of the battery changer. Further, the charged battery is conveyed to the front face of the battery take-out port of the self-propelled traveling device by means of the feed mechanism part, and the battery access part is advanced. The charged battery is then pushed out by the battery grasping part, and is loaded into the self-propelled traveling device. The battery exchanging action can be swiftly performed.
(2) By using the battery changer, the battery of the self-propelled traveling device can be exchanged, and two or more battery storage parts are provided. Two or more batteries can be stored in the battery storage parts. The batteries stored therein are charged in the battery storage parts. The batteries that have been completely charged can be supplied to the self-propelled traveling device. Therefore, a sufficient battery charging time can be taken, and there is no need to charge the battery quickly. Therefore, the lifetime of the battery can be lengthened.

The battery changer according to the second aspect of the present invention is characterized in that, in the invention according to the first aspect, the device body includes a pull-in part that moves forward and backward in forward and backward directions of the device body and a pair of pull-in arms disposed on both sides of the pull-in part.

With this structure, the following effect is achieved, in addition to the effects of the first aspect.
(1) The self-propelled traveling device in which the battery has been discharged can be captured by the pull-in arm, and can be pulled toward the device body by means of the pull-in part.

Preferably, herein, the completion of the operation of each of the pull-in arm, the battery access part, the battery grasping part, and the feed mechanism part is detected by a sensor, such as a limit switch or a proximity sensor, and is controlled by sequential control by which a shift to the next operation is sequentially performed. As a result, a battery exchanging action can be automatically performed, and manual operations or similar operations are unnecessary. Therefore, excellent labor saving is realized. A device that outputs a two-level signal, such as a limit switch or a photosensor, or a device that sequentially detects a change of an object and outputs a corresponding signal may be used as a sensor here.

The battery changer according to the third aspect of the present invention is characterized in that, according to the second aspect, the pull-in arm includes a pair of base arm parts that are rotatably attached to both side ends of the pull-in part and that turn horizontally; a pair of arm supporting parts that are rotatably attached to a front end of the base arm part and that turn horizontally; and a pair of engagement hooks disposed at a front end of the arm supporting part.

With this structure, the following effects are achieved, in addition to the effect of the second aspect.
(1) The base arm part and the arm supporting part are turned from the outside of the device body to the self-propelled traveling device, and the self-propelled traveling device is captured from both sides by means of the engagement hook provided at the front end of the arm supporting part so as to move the pull-in part backward, whereby the self-propelled traveling device can be easily pulled toward the device body.
(2) Since the pair of engagement hooks is provided, the battery is taken out from the self-propelled traveling device without allowing the self-propelled traveling device to incline. Further, a charged battery is pushed out toward the self-propelled traveling device, and is loaded into the self-propelled traveling device. A battery exchanging operation can be reliably performed in this way.

The battery changer according to the fourth aspect of the present invention is characterized in that, in the invention according to any one of the first to third aspects, the battery changer further includes a body-side accessing rail, which is laid back and forth on a rear side of the device body and on which the battery access part slides, and a storage-side accessing rail, which is laid on an internal bottom of each of the battery storage parts and which is connected to the body-side accessing rail.

With this structure, the following effect is achieved, in addition to the effects of any one of the first to third aspects.
(1) The battery access part is advanced from the body-side accessing rail toward the storage-side accessing rail, the battery is then held by the battery grasping part, and the battery access part is moved back toward the body-side accessing rail, whereby the battery held thereby can be directly stored in the battery storage part.

The battery changer according to the fifth aspect of the present invention is characterized in that, in the invention according to any one of the first to fourth aspects, the battery access part includes a graspingmotor, which rotates the battery grasping part in a normal direction and in a reverse direction, and the battery grasping part includes a push-out wall part that pushes the battery out and a pair of pull-in claw parts that are each shaped like a hook and that are protruded so as to face the push-out wall part.

With this structure, the following effects are achieved, in addition to the effects of any one of the first to fourth aspects.
(1) If a T-shaped grip is provided on the battery, the battery grasping part of the front end of the battery access part is advanced to the position of the grip of the battery, and the hook of the pull-in claw part is hooked onto the grip of the battery while running the graspingmotor, and the battery access part is moved back, whereby the battery can be taken out from the self-propelled traveling device.
(2) The battery access part is advanced, and the charged battery is pushed out by the push-out wall part, whereby the charged battery can be loaded into the self-propelled traveling device.
(3) If a T-shaped grip is provided on the battery so that the battery can be locked and unlocked by the rotation of the grip, the battery grasping part of the front end of the battery access part is advanced to the position of the grip of the battery, and the pull-in claw part is hooked onto the grip of the battery while running the grasping motor, and the battery is unlocked.

The battery changer according to the sixth aspect of the present invention is characterized in that, in the invention according to any one of the first to fifth aspects, the battery changer further includes a positioning support part that is disposed at a contact part, which is to come into contact with the self-propelled traveling device, of a front part of the device body and that is formed in a tapered manner on a side of the self-propelled traveling device; and a positioning slide rail that is laid on a floor surface in rightward and leftward directions of the device body and that slides the device body in rightward and leftward directions.

With this structure, the following effect is achieved, in addition to the effects of any one of the first to fifth aspects.
(1) The self-propelled traveling device is pulled toward the device body while bringing the positioning part of the self-propelled traveling device into contact with the positioning support part and sliding the positioning part thereon. Thereby, the device body can be positioned mechanically accurately with respect to the self-propelled traveling device while allowing the device body to slide on the positioning slide rail. Therefore, excellent positioning accuracy is realized.

The battery changer according to the seventh aspect of the present invention is characterized in that, in the invention according to any one of the first to sixth aspects, each of the battery storage parts has a charging terminal through which the battery is charged in a state in which the battery is stored.

With this structure, the following effect is achieved, in addition to the effects of any one of the first to sixth aspects.
(1) The discharged battery is stored in the battery storage part. This battery can be charged in a state in which the battery-side terminal disposed on, for example, the casing sidewall of the battery is brought into contact with the storage-side terminal disposed on, for example, the internal sidewall of the battery storage part and in a state in which the battery is stored in the battery storage part.

### Brief Description of Drawings

FIG. 1A is an overall plan view of a battery changer according to a first embodiment of the present invention.
FIG. 1B is an overall side view of the battery changer according to the first embodiment of the present invention.
FIG. 2 is a schematic plan view of a main part of the battery changer according to the first embodiment, showing the operation prior to the start of a capturing action to capture a self-propelled traveling device.
FIG. 3A is a perspective plan view of a main part of a pull-in arm, showing the operation of the pull-in arm when a self-propelled traveling-device capturing action starts.
FIG. 3B is a perspective plan view of the main part of the pull-in arm, showing the operation of the pull-in arm when a self-propelled traveling-device capturing action is being performed.
FIG. 3C is a perspective plan view of the main part of the pull-in arm, showing the operation of the pull-in arm when a self-propelled traveling-device capturing action is completed.
FIG. 4A is an enlarged perspective view of a main part of a sensor used for an arm when a self-propelled traveling-device capturing action starts.
FIG. 4B is an enlarged perspective view of the main part of the sensor used for the arm when a self-propelled traveling-device capturing action is being performed.
FIG. 4C is an enlarged perspective view of the main part of the sensor used for the arm when a self-propelled traveling-device capturing action is completed.
FIG. 5A is a perspective view of a main part of a pull-in part when an action to pull the self-propelled traveling device in starts.
FIG. 5B is a perspective view of the main part of the pull-in part when an action to pull the self-propelled traveling device in is completed.
FIG. 6A is a plan view of a main part of a battery access part, showing the operation of the battery access part when a battery grasping action starts.
FIG. 6B is a plan view of the main part of the battery access part, showing the operation of the battery access part when a battery grasping action is being performed.
FIG. 7A is an enlarged view of a main part of a battery grasping part, showing the operation of the battery grasping part when a battery grasping action is being performed.
FIG. 7B is an enlarged view of the main part of the battery grasping part, showing the operation of the battery grasping part when a battery grasping action is being performed.
FIG. 7C is an enlarged view of the main part of the battery grasping part, showing the operation of the battery grasping part when a battery grasping action is completed.
FIG. 8A is a perspective plan view of a main part of a battery access part, showing the operation of the battery access part when a battery storing action starts.
FIG. 8B is a perspective plan view of the main part of the battery access part, showing the operation of the battery access part when a battery storing action is being performed.
FIG. 8C is a perspective plan view of the main part of the battery access part, showing the operation of the battery access part when a battery storing action is completed.
FIG. 9A is a perspective view of a main part of a battery storage part, showing the operation of the battery storage part when a battery exchanging action starts.
FIG. 9B is a perspective view of the main part of the battery storage part, showing the operation of the battery storage part when a battery exchanging action is completed.
FIG. 10A is a perspective plan view of a main part of a positioning support part when positioning is being performed.
FIG. 10B is a perspective plan view of the main part of the positioning support part when positioning is completed. Best Mode for Carrying Out the Invention

An embodiment of the present invention will be hereinafter described with reference to the attached drawings.

### (First Embodiment)

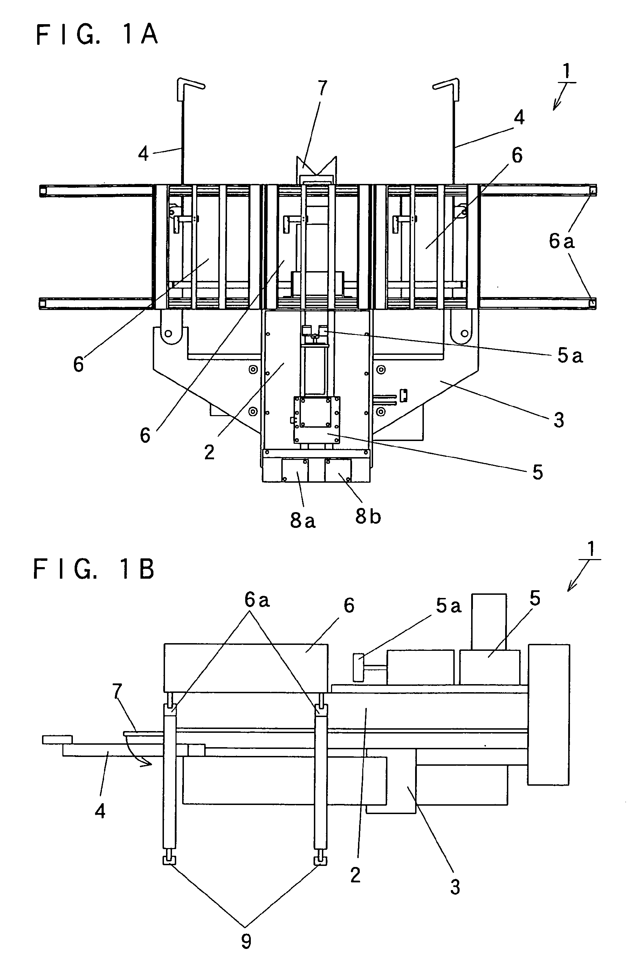

FIG. 1A is an overall plan view of a battery changer according to a first embodiment, and FIG. 1B is an overall side view of the battery changer according to the first embodiment.

In FIG. 1, reference character 1 denotes the battery changer according to the first embodiment, reference character 2 denotes a device body of the battery changer 1, reference character 3 denotes a pull-in part of the device body 2 that slides in the forward and backward directions, reference character 4 denotes a pull-in arm that is disposed at both side parts of the pull-in part 3 and that expands and contracts toward and from the front of the device body 2, reference character 5 denotes a battery access part that is disposed at the central part of the device body 2 and that moves while sliding in the forward and backward directions of the device body 2, reference character 5a denotes a battery grasping part disposed at the front end of the battery access part 5, reference character 6 denotes battery storage parts that are disposed at the front of the battery access part 5 and that are arranged side by side so as to be slidable in the rightward and leftward directions of the device body 2, reference character 6a denotes a feed mechanism part that slides the battery storage part 6 in the rightward and leftward directions of the device body 2, reference character 7 denotes a positioning support part disposed at the center of the front end of the device body 2, reference character 8a denotes a light-emission-side phototube disposed at the rear center of the device body 2, reference character 8b denotes a light-reception-side phototube disposed at the rear center of the device body 2, and reference character 9 denotes a positioning slide rail that slides the device body 2 in the rightward and leftward directions.

A description will be given of the operation of the thus structured battery changer according to the first embodiment with reference to the drawings.

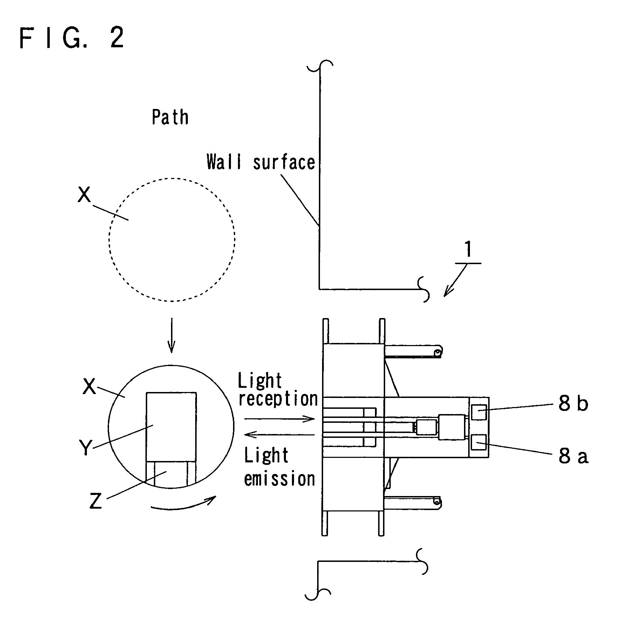

FIG. 2 is a schematic plan view of a main part of the battery changer according to the first embodiment, showing the operation prior to the start of a capturing action to capture a self-propelled traveling device.

In FIG. 2, reference character 1 denotes the battery changer according to the first embodiment, reference character X denotes the self-propelled traveling device, reference character Y denotes a battery mounted on the self-propelled traveling device X, and reference character Z denotes a battery take-out port formed in the back face of the self-propelled traveling device X.

First, when the self-propelled traveling device X detects that the mounted battery Y has run out, the self-propelled traveling device X departs from a patrol path provided in a building or on a building plot, and moves to a location at which the pre-programmed battery changer 1 is placed. As shown in FIG. 2, the battery changer 1 is placed along the wall surface of the path. The self-propelled traveling device X approaches the battery changer 1, and moves in front of the battery changer 1. The battery changer 1 is always emitting a signal to the front of the device body 2 from the light-emission-side phototube 8a. When the self-propelled traveling device X reaches the front face of the battery changer 1, the self-propelled traveling device X receives a signal emitted from the light-emission-side phototube 8a, and stops at that position. The self-propelled traveling device X turns so as to direct the back face of the self-propelled traveling device X in which the battery take-out port Z is formed toward the battery changer 1. When the self-propelled traveling device X completely turns, the self-propelled traveling device X emits a signal from the back face thereof to the battery changer 1. When the battery changer 1 receives the signal from the self-propelled traveling device X by means of the light-reception-side phototube 8b, the battery changer 1 starts a capturing action to capture the self-propelled traveling device.

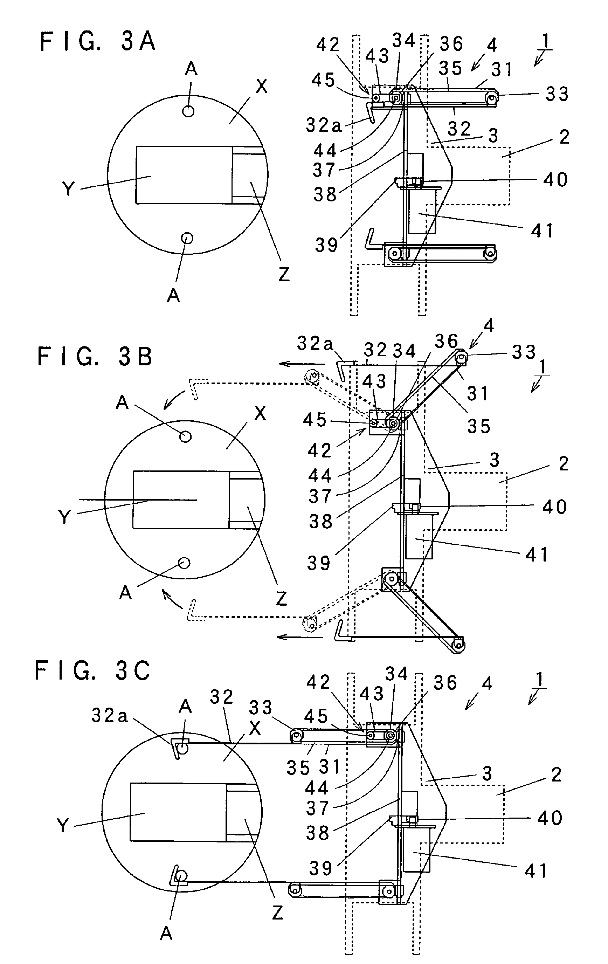

FIG. 3A is a perspective plan view of a main part of a pull-in arm, showing the operation of the pull-in arm when a self propelled traveling-device capturing action starts, FIG. 3B is a perspective plan view of the main part of the pull-in arm, showing the operation of the pull-in arm when a self propelled traveling-device capturing action is being performed, and FIG. 3C is a perspective plan view of the main part of the pull-in arm, showing the operation of the pull-in arm when a traveling-device capturing action is completed.

In FIG. 3, reference character 1 denotes the battery changer according to the first embodiment, reference character 2 denotes the device body, reference character 3 denotes the pull-in part, reference character 4 denotes the pull-in arm, reference character X denotes the self-propelled traveling device, reference character Y denotes the battery, and reference character Z denotes the battery take-out port. Since these are the same as the elements described in FIGS. 1 and 2, the same reference character as in FIGS. 1 and 2 is given to each element in FIG. 3, and a description thereof is omitted. Reference character 31 denotes a base arm part of the pull-in arm 4, reference character 32 denotes an arm supporting part, reference character 32a denotes an engagement hook, reference character 33 denotes an arm-supporting-side pulley, reference character 34 denotes a base-arm-side pulley, reference character 35 denotes an arm belt, reference character 36 denotes a worm wheel, reference character 37 denotes a worm gear, reference character 38 denotes a shaft, reference character 39 denotes a shaft gear, reference character 40 denotes a motor-side gear, reference character 41 denotes an arm motor, reference character 42 denotes an arm sensor, reference character 43 denotes a sensor belt, reference character 44 denotes a base-arm-side sensor pulley, and reference character 45 denotes a sensor-side pulley. Since the right and left pull-in arms 4 provided on both sides of the pull-in part 3 are performed in the same manner, only the operation of the pull-in arm 4 provided on the side of the right arm will be described in the first embodiment.

As shown in FIG. 2, when the light-reception-side phototube 8b receives a signal from the self-propelled traveling device X, a drive start signal is sent to the arm motor 41 used for the arm, the arm motor 41 is then driven, and the shaft 38 rotates via the motor-side gear 40 and the shaft gear 39. Accordingly, the worm gear 37 provided at an end of the shaft 38 rotates, and the worm wheel 36 rotates. The worm wheel 36 is fixed to an end of the base arm part 31, and, in response to the rotation of the worm wheel 36, the base arm part 31 pivots outwardly (see FIG. 3B). The base arm part 31 has the base-arm-side pulley 34, which is coaxially fixed to the worm wheel 36 and which is turned in response to the rotation of the worm wheel 36, provided an end of the base arm part 31. The base arm part 31 additionally has the arm-supporting-side pulley 33 provided at the opposite end thereof on the side of the arm supporting part. The belt 35 is wound onto the base-arm-side pulley 34 and onto the arm-supporting-side pulley 33. When the base arm part 31 pivots outwardly, the arm-supporting-side pulley 33 rotates via the arm belt 35 in response to the rotation of the base-arm-side pulley 34. The arm-supporting-side pulley 33 is fixed to an end of the arm supporting part 32. The arm supporting part 32 pivots in response to the rotation of the arm-supporting-side pulley 33. The arm supporting part 32 pivots together with the arm-supporting-side pulley 33, and relatively changes an angle with respect to the base arm part 31. However, since the arm-supporting-side pulley 33 is interlocked with the base-arm-side pulley 34, the arm supporting part 32 extends toward the self-propelled traveling device X without relatively changing an angle with respect to the device body 2. The engagement hook 32a provided at the front end of the arm supporting part 32 is engaged with an engagement part A provided on each side of the self-propelled traveling device X at the position where the arm supporting part 32 extends completely. The self-propelled traveling device is captured in this way. The arm sensor 42 for the arm detects that the arm supporting part 32 has extended completely and that the engagement hook 32a has been engaged with the engagement part A, i.e., detects the completion of the self-propelled traveling-device capturing action. In response to this, the self-propelled traveling device is pulled in. The operation of the arm sensor 42 will be hereinafter described with reference to the drawings .

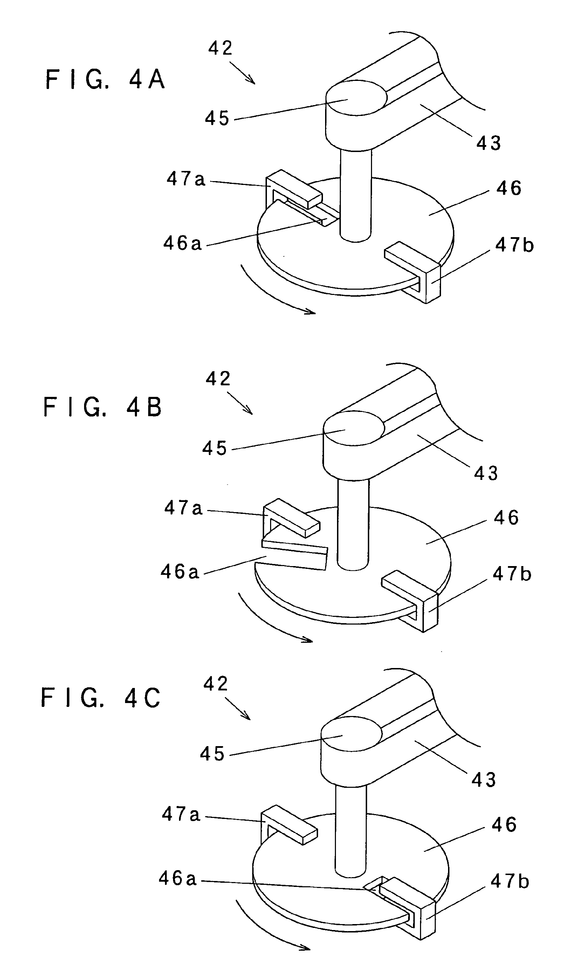

FIG. 4A is an enlarged perspective view of a main part of the sensor used for the arm when a self-propelled traveling-device capturing action starts, FIG. 4B is an enlarged perspective view of the main part of the sensor used for the arm when a self-propelled traveling-device capturing action is being performed, and FIG. 4C is an enlarged perspective view of the main part of the sensor used for the arm when a self-propelled traveling-device capturing actioniscompleted.

In FIG. 4, reference character 42 denotes an arm sensor, reference character 43 denotes a sensor belt, and reference character 45 denotes a sensor-side pulley. These are the same as those described in FIG. 3. Reference character 46 denotes an arm sensor plate, reference character 46a. denotes a slit part, and reference characters 47a and 47b denote capture sensors. Photosensors that sense an object, which passes between a light emitting element and a light receiving element arranged to face each other, in a no contact manner are used as the capture sensors 47a and 47b.

In the self-propelled traveling-device capturing action shown in FIG. 3, the worm wheel 36 rotates 180°. The base-arm-side sensor pulley 44 is coaxially fixed to the worm wheel 36, and rotates 180° in the same way. The sensor-side pulley 45 rotates in response to the rotation of the base-arm-side sensor pulley 44 via the sensor belt 43. As shown in FIG. 4, the arm sensor plate 46 is fixed to the sensor-side pulley 45, and rotates in response thereto. The arm sensor plate 46 has the slit part 46a formed from the circumference toward the center. Since the light emitting element and the light receiving element are blocked by the arm sensor plate 46, light emitted from the light emitting element is not received by the light receiving element. However, light emitted from the light emitting element is received by the light receiving element by allowing the slit part 46a to move to the respective positions. Thereby, the capture sensors 47a and 47b sense the slit part 46a, and emit signals. The base arm part 31 pivots by the rotation of the worm wheel 36, and the arm sensor plate 46 rotates by the same angle, so that the slit part 46a moves. As shown in FIG. 4A, the slit part 46a is positioned at the capture sensor 47a when the action to capture the self-propelled traveling device starts. However, as shown in FIG. 4C, the slit part 46a moves to the position of the capture sensor 47b when the action to capture the self-propelled traveling device is completed. When the capture sensor 47b senses that the slit part 46a has moved to the position of the capture sensor 47b, a drive stop signal is sent to the arm motor 41 shown in FIG. 3, and the arm motor 41 stops driving. The completion of the action to capture the self-propelled traveling device is detected in this way, and then the action to pull the self-propelled traveling device in is performed.

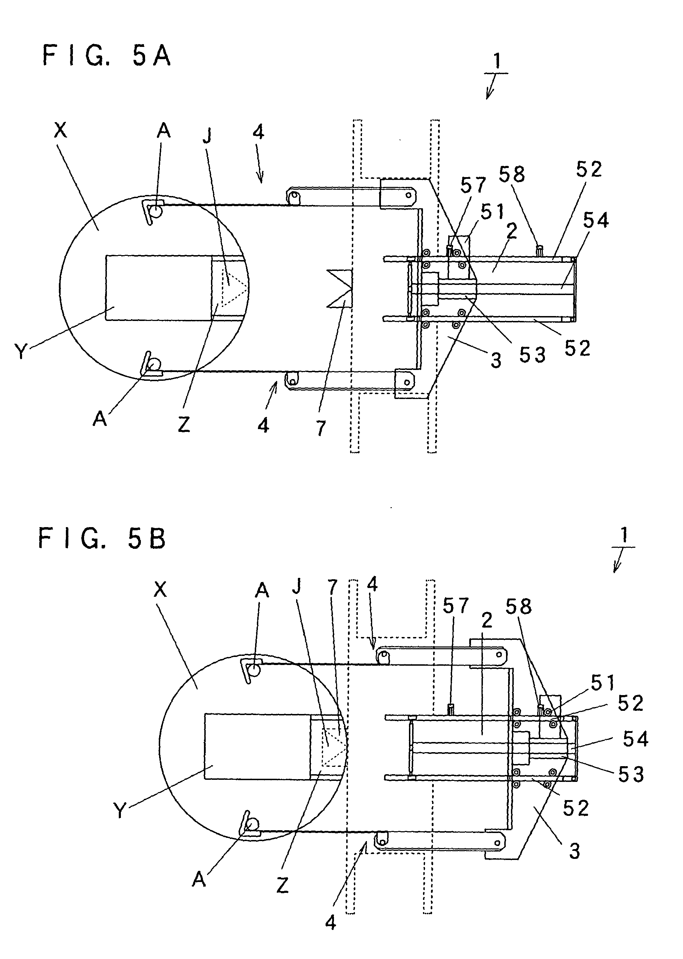

FIG. 5A is a perspective view of a main part of the pull-in part when the action to pull the self-propelled traveling device in starts, and FIG. 5B is a perspective view of the main part of the pull-in part when the action to pull the self-propelled traveling device in is completed.

In FIG. 5, reference character 1 denotes a battery changer according to the first embodiment, reference character 2 denotes a device body, reference character 3 denotes a pull-in part, reference character 4 denotes a pull-in arm, reference character 7 denotes a positioning support part, reference character X denotes a self-propelled traveling device, reference character Y denotes a battery, reference character Z denotes a battery take-out port, and reference character A denotes an engagement part. These are the same as those described in FIGS. 1 to 3. Therefore, the same reference character as in FIGS. 1 to 3 is given to each element in FIG. 5, and a description thereof is omitted. Reference character 51 denotes a pull-in motor, reference character 52 denotes a pull-in rail, reference character 53 denotes a direct-acting device part, reference character 54 denotes a direct-acting rod having a male screw, reference character 56 denotes a pull-in sensor projection, reference character 57 denotes a front pull-in sensor, reference character 58 denotes a rear pull-in sensor, and reference character J denotes a positioning part. For example, photosensors that sense an object that passes between a light emitting element and a light receiving element, which are arranged to face each other in the shape of U, in a no contact manner are used as the front and rear pull-in sensors 57 and 58. When the projection for the pull-in sensor (not shown) provided on the upper or lower part of the pull-in part 3 passes through a U-shaped gap between the front pull-in sensor 57 and the rear pull-in sensor 58 in response to the movement of the pull-in part 3, the front pull-in sensor 57 and the rear pull-in sensor 58 sense the projection, and emit a signal. Contact type sensors that sense the projection by contact therewith may be used as the front and rear pull-in sensors 57 and 58. The direct-acting device part 53 includes a female screw member that is fitted to and engaged with the direct-acting rod 54 and that is rotationally driven by the drive of the pull-in motor 51. The direct-acting device part 53 can convert the rotational motion of the pull-in motor 51 into the rectilinear motion in the forward and backward directions of the device body 2, and can move the pull-in part 3 along the direct-acting rod 54.

As shown in FIG. 3 and FIG. 4, when the capture sensor 47b senses that the slit part 46a has moved to the position of the capture sensor 47b, a drive stop signal is sent to the arm motor 41, so that the arm motor 41 stops driving. Simultaneously, a drive start signal is sent to the pull-in motor 51 shown in FIG. 5, so that the pull-in motor 51 starts driving. In accordance with the drive of the pull-in motor 51, the direct-acting device part 53 converts the rotational motion of the pull-in motor 51 into the rectilinear motion in the rear direction of the device body 2, and moves along the direct-acting rod 54. As a result, the pull-in part 3 slides along the pull-in rail 52, and moves toward the rear part of the device body 2. Since the pull-in arm 4 is capturing the self-propelled traveling device X, the self-propelled traveling device X is pulled in toward the device body 2 and is moved when the pull-in part 3 moves toward the rear part of the device body 2. The projection for the pull-in sensor is provided on the upper or lower part of the pull-in part 3. When the pull-in part 3 moves toward the rear part of the device body 2, and when the pull-in sensor projection 56 is sensed by the rear pull-in sensor 58 at a position where the positioning part J of the self-propelled traveling device X is in contact with the positioning support part 7 disposed at the front end of the device body 2, a drive stop signal is sent to the pull-in motor 51, so that the pull-in motor 51 stops. In this way, the self-propelled traveling device is pulled in.

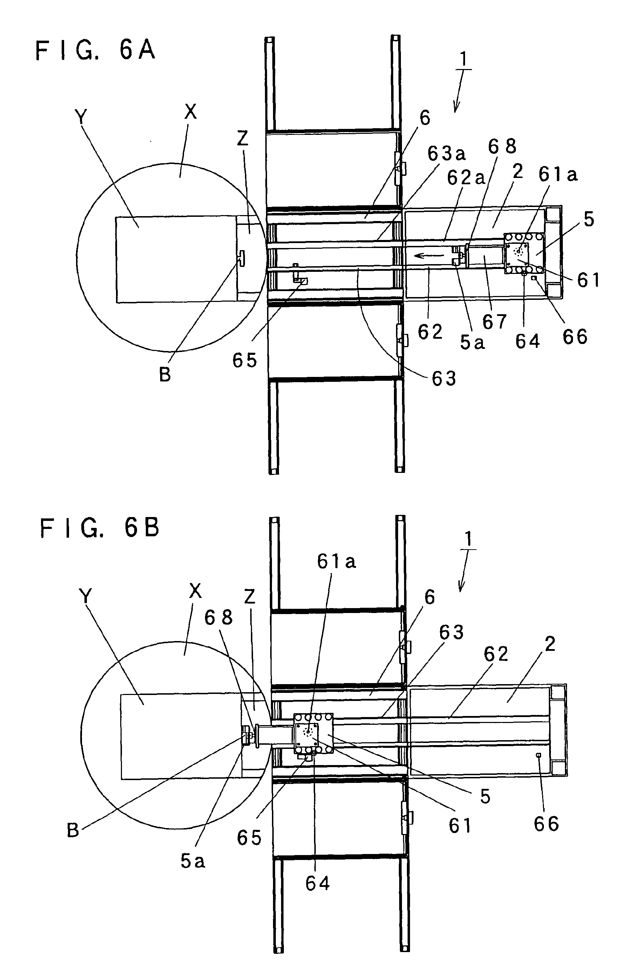

FIG. 6A is a plan view of a main part of a battery access part, showing the operation of the battery access part when a battery grasping action starts, and FIG. 6B is a plan view of themainpart of the battery access part, showing the operation of the battery access part when a battery grasping action is being performed.

In FIG. 6, reference character 1 denotes a battery changer according to the first embodiment, reference character 2 denotes a device body, reference character 3 denotes a pull-in part, reference character 5 denotes a battery access part, reference character 5a denotes a battery grasping part, reference character X denotes a self-propelled traveling device, reference character Y denotes a battery, and reference character Z denotes a battery take-out port. These are the same as those described in FIGS. 1 to 3. Reference character 61 denotes an accessing motor, reference character 61a denotes a pinion that is disposed on the bottom of the battery access part 5 and that rotates by the drive of the accessing motor 61, reference character 62 denotes a body-side accessing rail, reference character 62a denotes a body-side rack with which the pinion 61a meshes, reference character 63 denotes a storage-side accessing rail, reference character 63a denotes a storage-side rack connected to the body-side rack 62a, reference character 64 denotes an access-sensor projection, reference character 65 denotes front accessing sensor, reference character 66 denotes a rear accessing sensor, reference character 67 denotes a grasping motor, reference character 68 denotes a grasping sensor plate, and reference character B denotes a grip.

As shown in FIG. 5, when the pull-in sensor projection 56 is detected by the rear pull-in sensor 58, a drive stop signal is sent to the pull-in motor 51, so that the pull-in motor 51 stops. Simultaneously, a drive start signal is sent to the accessing motor 61 shown in FIG. 6, the accessing motor 61 is then driven, and the pinion 61a is rotationally driven. The pinion 61a rotates while meshing with the body-side rack 62a, and the battery access part 5 slides along the body-side accessing rail 62. The body-side rack 62a is connected to the storage-side rack 63a, and the body-side accessing rail 62 is connected to the storage-side accessing rail 63. The battery access part 5 moves along the storage-side accessing rail 63 laid on the bottom of the battery storage part 6 from the body-side accessing rail 62, and moves from the rear side to the front side of the device body 2. The battery access part 5 moves to the front end of the device body 2, and the access-sensor projection 64 provided on the battery access part 5 approaches the front accessing sensor 65. When the front accessing sensor 65 senses the access-sensor projection 64, a drive stop signal is sent to the accessing motor 61, and the accessing motor 61 stops. Accordingly, the battery access part 5 stops at a position at which the battery grasping part 5a comes into contact with the grip B of the battery Y.

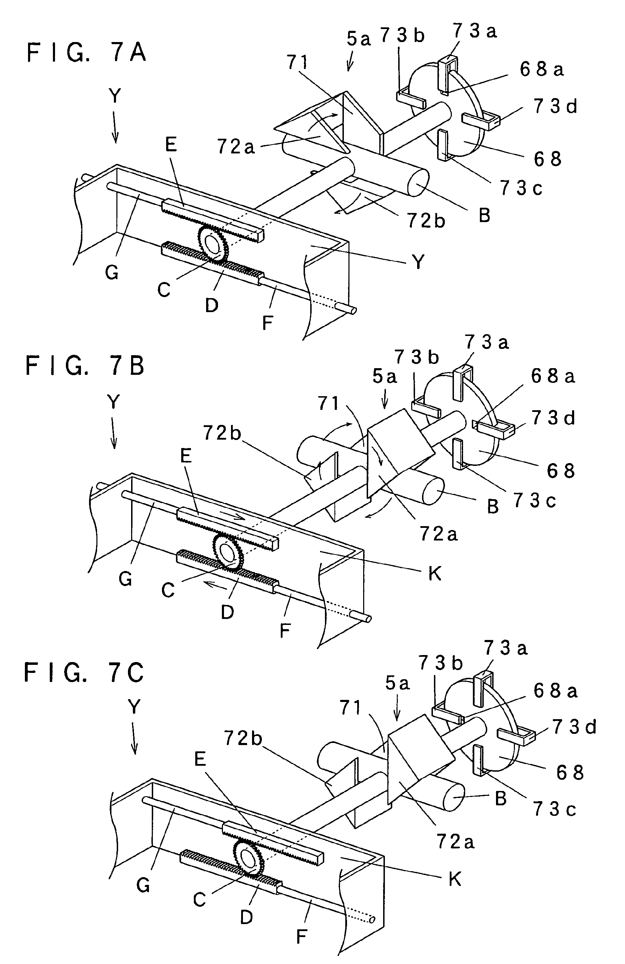

FIG. 7A is an enlarged view of a main part of a battery grasping part, showing the operation of the battery grasping part when a battery grasping action is being performed, FIG. 7B is an enlarged view of the main part of the battery grasping part, showing the operation of the battery grasping part when a battery grasping action is being performed, and FIG. 7C is an enlarged view of the main part of the battery grasping part, showing the operation of the battery grasping part when a battery grasping action is completed. Concerning the battery Y, only the front wall of a casing is shown, and the inside of the battery Y is not shown, for convenience of explanation.

In FIG. 7, reference character 5a denotes a battery grasping part, reference character 68 denotes a grasping sensor plate, reference character B denotes a grip, and reference character Y denotes a battery. These are the same as those described in FIG. 6. Reference character 68a denotes a slit part formed from the outer periphery to the center of the grasping sensor plate 68, reference character 71 denotes a push-out wall part, reference characters 72a and 72b denote pull-in clawparts, reference characters 73a, 73b, 73c, and 73d denote grasping sensors that are evenly spaced on the periphery of the grasping sensor plate 68, reference character C denotes a locking gear part, reference character D denotes a lower rack that meshes with the lower side of the locking gearpart , reference character E denotes an upper rack that meshes with the upper side of the locking gear part , reference character F denotes a lower locking rod that is connected to the lower rack, reference character G denotes an upper locking rod that is connected to the upper rack, and reference character K denotes a front wall of the casing of the battery Y.

As shown in FIG. 6, when the front accessing sensor 65 senses the access-sensor projection 64, a drive stop signal is sent to the accessing motor 61, so that the accessing motor 61 stops. Simultaneously, a drive start signal is sent to the grasping motor 67, so that the grasping motor 67 is driven. The grasping sensor plate 68 and the battery grasping part 5a shown in FIG. 7 rotate in response to the drive of the grasping motor 67. As shown in FIG. 7B, the battery grasping part 5a rotates 90° so as to hold the grip B with the pull-in claw parts 72a and 72b, and, as shown in FIG. 7C, further rotates 180°so as to unlock the battery Y. The locking gear part is disposed on the inner side of the front wall K of the casing of the battery Y, and is geared to the grip B. The locking gear part rotates in response to the rotation of the grip B, and moves the lower locking rod F and the upper locking rod G inwardly via the lower and upper racks D and E, so that the battery Y is unlocked. Since the slit part 68a of the grasping sensor plate 68 moves to the position of the grasping sensor 73b at this time, the grasping sensor 73b senses the slit part 68a, and sends a drive stop signal to the grasping motor 67 shown in FIG. 6, whereby the grasping motor 67 stops. The battery is held in this way.

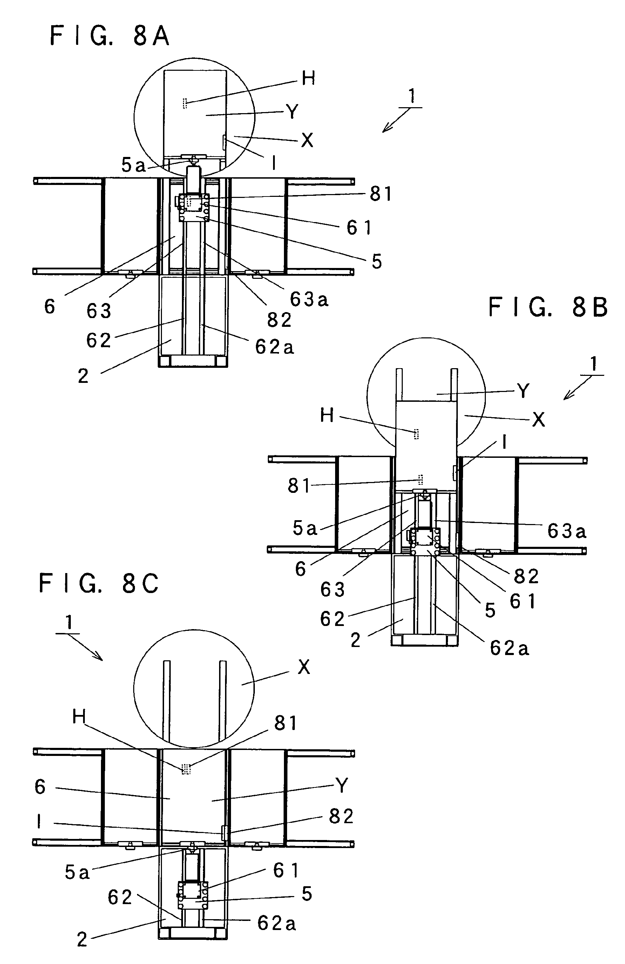

FIG. 8A is a perspective plan view of a main part of a battery access part, showing the operation of the battery access part when a battery storing action starts, FIG. 8B is a perspective plan view of the main part of the battery access part, showing the operation of the battery access part when a battery storing action is being performed, and FIG. 8C is a perspective plan view of the main part of the battery access part, showing the operation of the battery access part when a battery storing action is completed.

In FIG. 8, reference character 1 denotes a battery changer according to the first embodiment, reference character 2 denotes a device body, reference character 5 denotes a battery access part, reference character 5a denotes a battery grasping part, reference character 61 denotes an accessing motor, reference character 62 denotes a body-side accessing rail, reference character 62a denotes a body-side rack, reference character 63 denotes a storage-side accessing rail, reference character 63a denotes a storage-side rack, reference character X denotes a self-propelled traveling device, and reference character Y denotes a battery. These are the same as those described in FIG. 1, FIG. 2, and FIG. 6. Reference character 81 denotes a battery storage sensor disposed on the lower part of the battery storage part 6, reference character 82 denotes a storage-side charging terminal, reference character H denotes a battery projection that protrudes from the bottom of the battery Y, and reference character I denotes a battery-side charging terminal.

As shown in FIG. 6 and FIG. 7, when the grasping sensor 73b senses the slit part 68a, a drive stop signal is sent to the grasping motor 67, and a drive start signal is sent to the accessing motor 61, so that the accessing motor 61 is driven. Accordingly, the battery access part 5 slides toward the rear side of the device body 2 along the storage-side accessing rail 63 and the body-side accessing rail 62 connected thereto. As shown in FIG. 8B, the battery Y is conveyed to the battery storage part 6 by means of the battery access part 5, and is stored in the battery storage part 6 as shown in FIG. 8C. When the battery projection H is sensed by the battery storage sensor 81, a drive stop signal is sent to the accessing motor 61, and the battery access part 5 stops temporarily. Simultaneously, the battery grasping part 5a is rotated, and the grip B is released from being held. When the grip B is released from being held by means of the battery grasping part 5a, a drive start signal is sent to the accessing motor 61. Accordingly, the battery access part 5 slides to the rear side of the device body 2. When the rear accessing sensor 66 shown in FIG. 6 senses the access-sensor projection 64, a drive stop signal is sent to the accessing motor 61, and the accessing motor 61 stops. The battery is stored in this way.

The battery Y is stored in the battery storage part 6, and, simultaneously with being stored, the battery-side charging terminal I of the battery Y comes into contact with the storage-side terminal 82 of the battery storage part 6, and the battery Y starts being charged.

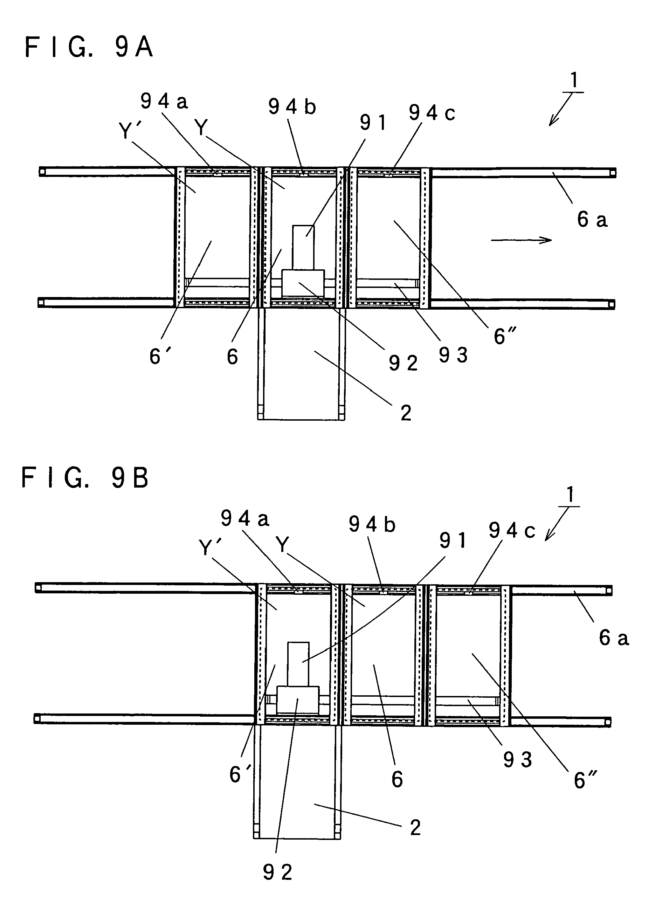

FIG. 9A is a perspective view of a main part of a feed mechanism part and a main part of a battery storage part, showing the operation of the feed mechanism part and the operation of the battery storage part when a battery feeding action starts, and FIG. 9B is a perspective view of the main part of the feed mechanism part and the main part of the battery storage part, showing the operation of the feed mechanism part and the operation of the battery storage part when a battery feeding action is completed.

In FIG. 9, reference character 1 denotes a battery changer according to the first embodiment, reference character 2 denotes a device body, reference character 6 denotes a battery storage part, reference character 6a denotes a feed mechanism part, and reference character Y denotes a battery. These are the same as those described in FIG. 1. Reference characters 6' and 6" denote battery storage parts, reference character Y' denotes a charged battery stored in the battery storage part 6' , reference character 91 denotes a storage part feeding motor, reference character 92 denotes a direct-acting device part for storage, reference character 93 denotes a direct-acting rod for storage, and reference characters 94a, 94b, and 94c denote storage-part feeding sensors that are disposed at the battery storage parts 6', 6, and 6", respectively. In the first embodiment, a description will be given of a case in which a discharged battery Y is stored in the battery storage part 6, and a charged battery Y' to be loaded into the self-propelled traveling device X by battery exchanging is stored in the battery storage part 6'. When the battery storage parts 6', 6, and 6" move to the center of the device body 2, each of the sensors 94a, 94b, and 94c senses a to-be-sensed projection (not shown) disposed at the front end of the center of the device body 2, and sends a predetermined driving signal, i.e., a normal-rotation start signal, or a reverse-rotation start signal, or a rotation stop signal to the storage part feeding motor 91. The storage part feeding motor 91 is driven according to this signal, and the battery storage parts 6', 6, and 6" are successively moved to the center of the device body 2. This makes it possible to prevent a battery that has not been sufficiently charged from being loaded into the self-propelled traveling device. It is permissible that a charged one having a great electric capacity among the batteries stored in the battery storage parts 6', 6, and 6" is sensed by, for example, a battery-capacity sensing part, and is selectively moved to the center of the device body 2, in addition to the fact that the batteries stored in the battery storage parts 6', 6, and 6" are successively loaded. The direct-acting device part 92 includes a female screw member that is fitted and engaged with the direct-acting rod 93 and that is rotationally driven by the drive of the storage part feeding motor 91. The direct-acting device part 92 can convert the rotational motion of the storage part feedingpull-inmotor 51 into the rectilinear motion in the rightward and leftward directions of the device body 2, and can move the battery storage part 6, 6', and 6" rightward and leftward along the direct-acting rod 93.

As shown in FIG. 6 and FIG. 7, when the rear accessing sensor 66 senses the access-sensor projection 64, a drive stop signal is sent to the accessing motor 61, and the storage-part feeding sensor 94b shown in FIG. 9 senses that the battery storage part 6 is situated at the center of the device body 2. Thereby, a normal-rotation drive start signal is sent to the storage part feeding motor 91, and the motor 91 is driven to run normally. In response to the normal rotation of the motor 91, the direct-acting rod 93 is slid by the direct-acting device part 92 rightward. Since the battery storage parts 6 and 6' are fixed to the direct-acting rod 93, the battery storage parts 6 and 6' slide together, and, as shown in FIG. 9B, the battery storage part 6' in which the battery Y' is stored moves to the center of the device body 2. When the battery storage part 6' moves to the center of the device body 2, the storage-part feeding sensor 94a senses this, and sends a drive stop signal to the motor 91, so that the motor 91 stops being driven. The battery feeding action is performed in this way.

When the battery storage part 6' in which the battery Y' is stored moves to the center of the device body 2, the battery access part 5 slides toward the self-propelled traveling device X with a motion opposite to that of FIG. 8. The battery access part 5 slides toward the self-propelled traveling device X while pushing the battery Y' with the push-out wall part 71 of the battery grasping part 5a, and pushes the battery Y' into the battery take-out port Z of the self-propelled traveling device X. When the battery Y' is loaded into the self-propelled traveling device X, the battery Y' is locked by the battery grasping part 5a with a motion opposite to that of FIG. 7. When thebatteryY' isloadedintotheself-propelledtravelingdevice X and is locked, the battery access part 5 slides toward the rear side of the device body 2. Further, the pull-in arm 4a grasping the self-propelled traveling device X expands to the device body 2, and a battery exchange is completed.

The battery changer 1 according to the first embodiment can perform highly accurate positioning by the positioning support part 7 shown in FIG. 1. The operation of the positioning support part will be hereinafter described with reference to the drawings.

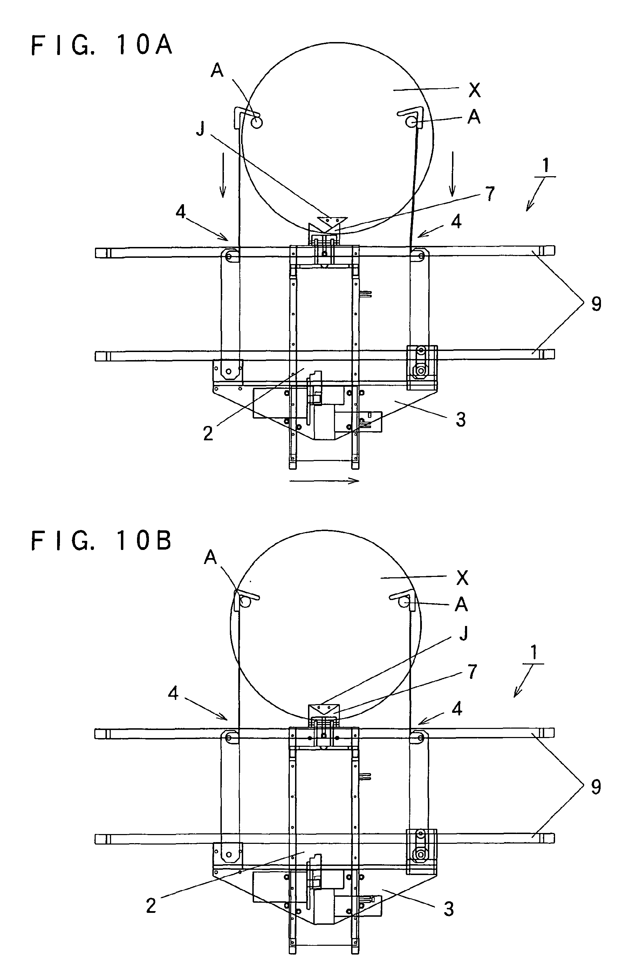

FIG. 10A is a perspective plan view of a main part of the positioning support part when positioning is being performed, and FIG. 10B is a perspective plan view of the main part of the positioning support part when positioning is completed.

In FIG. 10, reference character 1 denotes a battery changer according to the first embodiment, reference character 2 denotes a device body, reference character 3 denotes a pull-in part, reference character 4 denotes apull-in arm, reference character 7 denotes a positioning support part, reference character 9 denotes a positioning slide rail, reference character X denotes a self-propelled traveling device, reference character A denotes an engagement part, and reference character J denotes a positioning part. These are the same as those described in FIG. 1, FIG. 2, and FIG. 6.

In the self-propelled traveling-device pulling action shown in FIG. 6, the self-propelled traveling device X captured by the pull-in arm 4 is pulled in by the pull-in part 3 toward the device body 2 while bringing the positioning support part 7 into contact with the positioning support part 7 formed in a tapered manner. As shown in FIG. 10, since the positioning support part 7 is formed in a tapered manner, the device body 2 is slid rightward along the positioning slide rail 9, and is positioned with high accuracy with respect to the self-propelled traveling device X by pulling the self-propelled traveling device X inwardly while allowing the positioning part J to come into contact with a tapered surface of one side of the positioning support part 7 and to slide thereon. It is possible that, as shown in FIG. 1, the positioning support part 7 is shaped like a plate, and a start-up operation is performed when a battery exchanging action starts, whereas the positioning support part 7 is folded down and is stored in the front end of the device body 2 when the battery exchanging action is not performed. If so, the positioning support part 7 never protrudes from, for example, the wall surface of a path, thus realizing excellent safety and excellent space saving.

Since the battery changer according to the first embodiment is structured as above, the following effects are achieved.
(1) The self-propelled traveling device X in which the battery Y has been discharged can be captured by the pull-in arm 4, and can be pulled toward the device body 2. The battery access part 5 can be advanced to the battery take-out port Z of the self-propelled traveling device X, and can hold the battery Y with the battery grasping part 5a. The battery Y can be taken out from the batteryplacing part of the sel f-propelled traveling device X while moving the battery access part 5 backward, and can be stored in the battery storage part 6. Further, the charged battery Y' can be conveyed to the front face of the battery take-out port Z of the self-propelled traveling device X by means of the feed mechanism part 6a, and can be pushed out by the battery grasping part 5a while advancing the battery access part 5, and can be loaded into the self-propelled traveling device X. The battery exchanging action can be swiftly performed.
(2) The self-propelled traveling device X can be easily pulled toward the device body 2 by turning the base arm part 31 and the arm supporting part 32 from the outside of the device body 2 toward the self-propelled traveling device X and by capturing the self-propelled traveling device X from both sides by means of the engagement hook 32a provided at the front end of the arm supporting part 32 so as to move the pull-in part 3 backward.
(3) The battery access part 5 is advanced from the body-side accessing rail 62 to the storage-side accessing rail 63, the battery Y is then held by the battery grasping part 5a, and the battery access part 5 is movedback to the body-side accessing rail 62, whereby the battery Y held by the battery grasping part 5a can be directly stored in the battery storage part 6.
(4) The battery grasping part 5a at the front end of the battery access part 5 is advanced to the position of the grip B of the battery Y, the hooks of the pull-in claw parts 72a and 72b are then hooked onto the grip B of the battery Y while running the grasping motor 67, and the battery access part 5 is moved back, whereby the battery Y can be taken out from the self-propelled traveling device X.
(5) The battery access part 5 is advanced, and a charged battery Y' is pushed out by the push-out wall part 71, whereby the charged battery Y' can be loaded into the self-propelled traveling device X.
(6) The battery grasping part 5a at the front end of the battery access part 5 is advanced to the position of the grip B of the battery Y, and the pull-in claw parts 72a and 72b are hooked onto the grip B of the battery Y while running the grasping motor 67, and the battery Y can be unlocked.
(7) The self-propelled traveling device X is pulled toward the device body 2 while bringing the positioning part J of the self-propelled traveling device X into contact with the positioning support part 7, whereby the device body 2 can slide along the positioning slide rail 9, and can be positioned mechanically accurately. Therefore, excellent positioning accuracy can be obtained.
(8) The battery-side charging terminal I disposed on the casing sidewall of the battery Y can be brought into contact with the storage-side terminal 82 disposed on the internal sidewall of the battery storage part 6 by storing a discharged battery Y in the battery storage part 6, and the battery Y can be charged in the state in which the battery Y is stored in the battery storage part 6.

### Industrial Applicability

As described above, according to the battery changer of the present invention, the following advantageous effects can be obtained.

According to the first aspect of the invention, it is possible to provide the battery changer operated in the following manner.
(1) The battery access part is advanced to the battery take-out port of the self-propelled traveling device, and the battery is held by the battery grasping part. The battery access part is then moved back, and the battery is taken out, whereby the battery can be stored in the battery storage part. Further, the charged battery is conveyed to the front face of the battery take-out port of the self-propelled traveling device by means of the feed mechanism part, and the battery access part is advanced. The charged battery is then pushed out by the battery grasping part, and is loaded into the self-propelled traveling device. The battery exchanging action can be swiftly performed.

According to the second aspect of the invention, the following battery changer can be provided, in addition to the effect of the first aspect.
(1) The self-propelled traveling device in which the battery has been discharged is captured by the pull-in arm, and is pulled toward the device body by the pull-in part.

According to the third aspect of the invention, the following battery changer can be provided, in addition to the effect of the second aspect.
(1) The base arm part and the arm supporting part are turned from the outside of the device body to the self-propelled traveling device, and the self-propelled traveling device is captured from both sides by means of the engagement hook provided at the front end of the arm supporting part so as to move the pull-in part backward, whereby the self-propelled traveling device can be easily pulled toward the device body.

According to the fourth aspect of the invention, the following battery changer can be provided, in addition to the effect of any one of the first to third aspects.
(1) The battery access part is advanced from the a body-side accessing rail toward the a storage-side accessing rail, the battery is then held by the battery grasping part, and the battery access part is moved back toward the a body-side accessing rail, whereby the battery held thereby can be directly stored in the battery storage part.

According to the fifth aspect of the invention, the following battery changer can be provided, in addition to the effect of any one of the first to fourth aspects.
(1) If a T-shaped grip is provided on the battery, the battery grasping part of the front end of the battery access part is advanced to the position of the grip of the battery, and the hook of the pull-in claw part is hooked onto the grip of the battery while running the grasping motor, and the battery access part is moved back, whereby the battery can be taken out from the self-propelled traveling device.
(2) The battery access part is advanced, and the charged battery is pushed out by the push-out wall part, whereby the charged battery can be loaded into the self-propelled traveling device.
(3) If a T-shaped grip is provided on the battery so that the battery can be locked and unlocked by the rotation of the grip, the battery grasping part of the front end of the battery access part is advanced to the position of the grip of the battery, and the pull-in claw part is hooked onto the grip of the battery while running the grasping motor, and the battery is unlocked.

According to the sixth aspect of the invention, the following battery changer can be provided, in addition to the effect of any one of the first to fifth aspects.
(1) The self-propelled traveling device is pulled toward the device body while bringing the positioning part of the self-propelled traveling device into contact with the positioning support part and sliding the positioning part thereon. Thereby, the device body can be positioned mechanically accurately with respect to the self-propelled traveling device while allowing the device body to slide on the positioning slide rail. Therefore, excellent positioning accuracy is realized.

According to the seventh aspect of the invention, the following battery changer can be provided, in addition to the effect of any one of the first to sixth aspects.
(1) The discharged battery is stored in the battery storage part. This battery can be charged in a state in which the battery-side terminal disposed on, for example, the casing sidewall of the battery is brought into contact with the storage-side terminal disposed on, for example, the internal sidewall of the battery storage part and in a state in which the battery is stored in the battery storage part.

## Claims

1. A battery changer that exchanges a battery to be loaded into a self-propelled traveling device, comprising:
a battery access part that moves forward and backward between a device body and a battery take-out port of a battery placing part of said self-propelled traveling device;
a battery grasping part disposed at a front end of said battery access part;
a feed mechanism part that is disposed on a front side of said battery access part and that moves perpendicularly in forward and backward directions of said battery access part; and
two or more battery storage parts movably disposed at the battery access part and the feed mechanism part.

2. The battery changer as set forth in claim 1, wherein said device body comprises a pull-in part that moves forward and backward in forward and backward directions of the device body and a pair of pull-in arms disposed on both sides of said pull-in part.

3. The battery changer as set forth in claim 2, wherein the pull-in arm comprises:
a pair of base arm parts that are rotatably attached to both side ends of said pull-in part and that turn horizontally;
a pair of arm supporting parts that are rotatably attached to a front end of said base arm part and that turn horizontally; and
a pair of engagement hooks disposed at a front end of said arm supporting part.

4. The battery changer as set forth in any one of claims 1 to 3, further comprising:
a body-side accessing rail, being laid back and forth on a rear side of said device body, said battery access part sliding on the body-side accessing rail; and
a storage-side accessing rail, being laid on an internal bottom of each of said battery storage parts, and being connected to said body-side accessing rail.

5. The battery changer as set forth in any one of claims 1 to 4, wherein said battery access part comprises a grasping motor, rotating said battery grasping part in a normal direction and in a reverse direction, and said battery grasping part comprises a push-out wall part that pushes said battery out and a pair of pull-in claw parts that are each shaped like a hook and that are protruded so as to face said push-out wall part.

6. The battery changer as set forth in any one of claims 1 to 5, further comprising:
a positioning support part that is disposed at a contact part, which is to come into contact with said self-propelled traveling device, of a front part of said device body and that is formed in a tapered manner on a side of said self-propelled traveling device; and
a positioning slide rail that is laid on a floor surface in rightward and leftward directions of said device body and that slides said device body in rightward and leftward directions.

7. The battery changer as set forth in any one of claims 1 to 6, wherein each of said battery storage parts has a charging terminal through which said battery is charged in a state in which said battery is stored.
